# NEW EUROPEAN PATENT SPECIFICATION

(11) **EP 0 571 481 B2**
(45) Date of publication and mention of the opposition decision: **29.09.2004**
(45) Mention of the grant of the patent: 26.03.1997
(21) Application number: 92905063.1
(22) Date of filing: 20.02.1992
(51) Int. Cl.: F16C 33/12

(54) **BEARINGS**
LAGER
PALIERS

(30) Priority: 20.02.1991 GB 9103481
(43) Date of publication of application: 01.12.1993
(73) Proprietor: DANA CORPORATION, Toledo, OH 43615 (US)
(72) Inventor: JOHAL, Charan Preet Singh, Birstall, Leicester LE4 4NJ (GB); EASTHAM, David Raymond, Hemel Hempstead Hertfordshire HP3 0QW (GB); POPE, Alan David, Brownsover, Rugby CV21 1JX (GB)
(74) Representative: Goddard, David John
(86) International application number: PCT/GB1992/000300
(87) International publication number: WO 1992/014942

(56) References cited:
- EP-A- 0 131 428
- EP-B- 0 205 893
- EP-B- 0 265 937
- EP-B- 0 376 368
- DE-A- 4 036 835
- DE-C- 2 853 724
- GB-B- 2 040 315
- Plating and Surface Finishing, May 1985, p. 120-125
- Maschinenmarkt Würzburg, 84 (1978), p. 2014-2018
- Schmiertechnik + Tribologie, 1/1981, p. 12-15
- K.-H. Habig, Verschleiss und Härte von Werkstoffen, C. Hanser Verlag, 1980, p. 263
- O. Pigor, Werkstoffe in der Tribotechnik, Deutscher Verlag für Grundstoffindustrie, p. 240
- Galvanotechnik 82 (1981), No. 1, p.64,70
- Galvanotechnik 67 (1976), No. 12, p. 965, 972-974
- Ullmann, Vol. 7, p. 298-300
- Transactions of the Institue of Metal Finishing, 1977, Vol. 53, p. 113-116
- Plating and Surface Finishing, May 1976, p. 35-39
- Alcoa Leaflet "HIQ Aluminas", 2 pages
- BDH Leaflet "Aluminium Oxide", 1 page
- Allied High Tech Leaflet "Alumina Powders", 1 page
- Extec Corp. Leaflet "Polishing Powders", 1 page
- Johnson Matthey Leaflet "Alfa Products", 2 pages
- Degussa Leaflet "Technical Bulletin Pigments", No. 56, 3.1995, 2 pages
- Alcoa Leaflet "Paper Coatings and Fillers", 1 page
- M.B. Bever, Encyclopedia of Materials Science and Engineering, 1980, p.155-157
- H. Römpp, Chemie Lexikon, 1949, p. 44, 45
- H. Römpp, Chemie Lexikon, 1989, S. 139, 140
- Surface Vehicle Standard SAE J460, Rev. Oct. 91, p. 1,2
- Gould brochure "Custom Plain Bearing Products", p.13, dated by hand 1977
- Glacier brochure BM 403/73, G.C. Pratt "Materials for Plain Bearings", p. 1-28
- Paper No. 10 from AE Group Symposium '86, 3 pages
- Transactions of the ASME Vol. 115, Oct. 1993, p. 706-710
- Federal-Mogul brochure "Overlays" dated by hand 1998, one page
- Extract from Federal-Mogul website referring to copper-base crankshaft bearing alloys and lead-based overlays, 2 pages dated 19.1.00
- R.W. Cahn and P. Haasen, Physical Metallurgy, 4th Edition, vol.3, 1996, p. 2107-2111
- Industrial Lubrication and Technology, 11/12.86, p. 204-237

## Description

The present invention relates to use for plain bearings of a composite material comprising a bearing material on which is deposited an overlay coating and, particularly to the type of composite material having bearing materials generally known as overlay alloys.

Plain bearings for internal combustion engines, for example, generally comprise a strong backing material such as steel which has a layer of a bearing material strongly bonded thereto. The bearing material layer may be any known in the art, but aluminium-based alloys or copper-based alloys are typically used. There are very many different bearing alloys based on aluminium and copper, ranging from relatively soft to relatively hard alloys.

Important requirements for bearing alloys are conformability, or the ability of the bearing material to accommodate small misalignments of the shaft journal, and dirt embeddablity, or the ability of the bearing material to embed abrasive dirt particles to prevent damage by scoring of the journal. Generally speaking, these two requirements are more -characteristic of the relatively softer alloys such as aluminium - 20% tin and copper - 35% lead, for example. However, these softer alloys which have relatively high contents of a soft, second phase material, are also weaker in fatigue resistance than the harder, less conformable alloys. To produce bearings having adequate conformability and dirt embeddability whilst retaining a high fatigue strength, it is common practice to provide the relatively harder alloys with what is commonly referred to as an overlay. Overlays are generally produced from relatively very soft alloys, usually based on tin or lead and are usually very thin, typically about 25 micrometres in thickness. Although these overlay alloys are weak materials per se, when tested in "bulk" form; in the form of a thin coating on a relatively harder bearing material, they often give rise to an increase in the fatigue strength of a bearing. This increase in fatigue strength of the bearing is due to the conformability of the overlay, spreading the applied load over a greater bearing surface area, and preventing localised high loading factors, typically due to misalignment, from causing fatigue. However, even though overlays are able to be used in highly loaded applications, their inherent softness makes them prone to wear by the mating journal surface.

The problem of overlay wear has been exacerbated in recent years by the growing use of cast-iron crankshafts which are inherently more abrasive in nature than the steel shafts which preceded them. Much work has been carried out to improve the wear resistance of overlay alloys. Lead-tin-copper overlays were developed to improve upon the earlier lead-tin alloys, for example, but even these have resulted in only a relatively small improvement in terms of wear resistance.

It is an object of the present invention to provide a material for a bearing overlay which is more wear resistant than known overlay materials but which retains the desirable characteristics of conformabilily and dirt embeddability ol known overlays.

The present invention provides use for plain bearings of a composite material comprising a bearing material on which is deposited an overlay coating, the overlay coating comprising a soft metal matrix which has dispersed therein a second phase of a hard, non-metallic material, said hard, non-metallic material having a Vickers hardness (Hv) of at least 300, the bulk of said overlay coating being constituted by the soft metal matrix the composite material being characterised in that the matrix of the soft metal overlay coating is selected from the group consisting of: tin-based; lead-based; and, cadmium-based metals and in that the hard second phase consists of alumina particles and in that said soft metal and said hard particles are deposited by electro-codeposition and whereby the ability to embed dirt particles in said electro-codeposited overlay coating comprising the matrix selected from tin-based; lead-based; and, cadmium-based metals having the dispersed phase of alumina therein is not adversely affected compared with that of the soft metallic phase of the matrix. Materials having Hv values in the range of from 300 to in excess of 600 may be used.

The composite material may be combined with a strong backing material such as steel, for example. The bearing material may be any which is known and used in the bearing art.

The overlay matrix may comprise tin-based, lead-based or cadmium-based materials including the pure metals, whilst the hard particle phase consist of alumina.

The non-metallic hard particle phase may constitute from 0.05 up to 2 wt% content of the overlay, but is preferably not be more than about 1 wt%. The agglomerated size of said particles is preferably not more than about 5 micrometres and preferably no more than 1 micrometre. The size of individual particles is preferably less than about 1 micrometre. The presence of a small number of agglomerated particles in the size range 5 to 10 micrometres may be tolerated.

The overlay deposition method comprises electro-codeposition. Where the overlay is deposited by electro co-deposition, it is preferred that a minimum of 0.1 wt% of the non-metallic hard particle phase is present.

Because the bulk of the overlay consists of the soft metallic phase, the ability to embed dirt particles is not adversely affected.

In order that the present invention may be more fully understood examples will now be described by way of illustration only with reference to the accompanying drawings, of which:
Figure 1 shows a schematic representation of electro-plating apparatus used to deposit overlay coatings according to the invention;
Figure 2 shows a histogram of overlay wear against overlay type; and
Figure 3 which shows a graph depicting corrosion resistance for 3 levels of hard particle content.

### Example

Copper-lead half bearings were electro co-deposited with various contents of alpha-alumina in a lead-10% tin matrix. The bearings were plated in 8-high stacks in a conventional plating jig. The average particle size of the alumina was less than 1 micrometre. A lead-tin fluoborate solution having the following composition was used for all electro plating trials;

| | |
|---|---|
| Lead fluoborate - | 200 g/l |
| Stannous fluoborate - | 20 g/l |
| Free acid - | 90 g/l |
| Resorcinol - | 6 g/l |

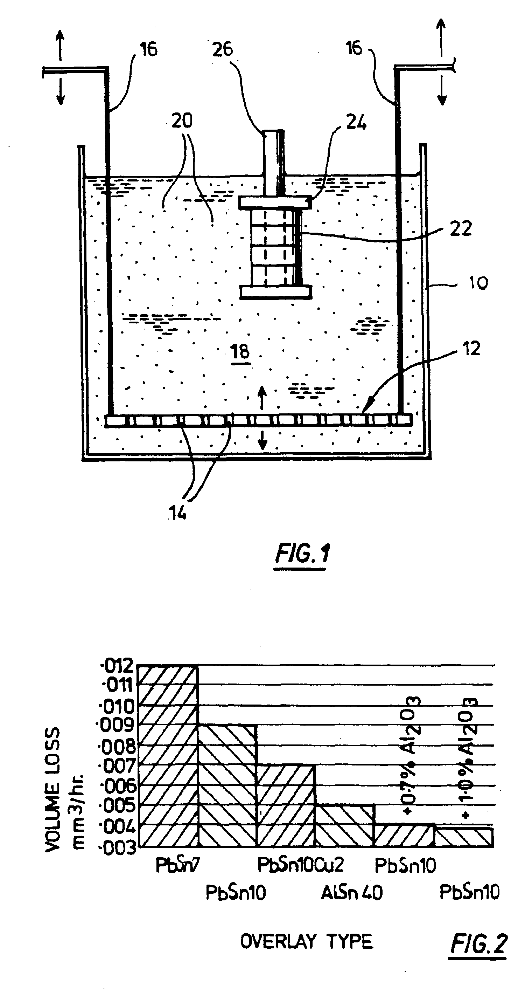

Various alumina contents were used, the particles being maintained in suspension by a plate pumping technique as schematically represented by the apparatus in Figure 1. The apparatus comprises a tank 10 having in the bottom thereof a plate 12 with perforations 14. The plate 12 is oscillated up and down on arms 16 driven by electric motor powered cams (not shown). The tank 10 contains the plating solution 18 with particles 20 held in suspension by the pumping action of the plate 12. The bearings to be plated 22 are held in pairs in a jig 24 with a central anode 26.

The overlay coating of the plated bearing samples consisted of a matrix having a composition of lead-10 wt% tin in which were dispersed varying amounts of alumina as set out in the Tables below.

The bearings were tested to assess their fatigue strength, wear resistance and corrosion resistance.

Fatigue strength was assessed by testing bearings of 50 mm diameter and 30 mm axial length on a test rig under the following conditions.:
Shaft speed 2800 rev/min;
Initial load 55 MPa;
Load increased after 20 hours at each load by
7MPa until failure;
Oil temperature 80°C; and
Sinusoidal load pattern.

Non-alumina containing bearings were also tested for the purpose of comparison.

Fatigue resistance of the bearings tested according to the above schedule are given in Table 1 below.

**Table 1**

| Wt% Alumina | Fatigue Load MPa |
|---|---|
| 0.0 | 62, 69, 76 |
| 0.3 | 76,83 |
| 0.7 | 69 |
| 1.0 | 76 |
| 2.2 | 76 |

These results show that the inclusion of a hard particle phase has no detrimental effect on the fatigue strength of the overlay.

Wear resistance of the deposited overlays was determined by testing at relatively low specific loadings, with wear being assessed by recording weight loss. The programme for each test was:
1 cycle at 48 MPa for 20 hours;
1 cycle at 55 MPa for 20 hours;
5 cyles at 62 MPa, each for 20 hours;
oil temperature 80°C; and
shaft speed 2800 rev/min.

The weight loss was recorded after each cycle.

As may be seen from Table 2 below and from the histogram of Figure 2, the addition of a hard particle phase considerably improves the wear resistance of the overlay. An addition of 1 wt% alumina reduces wear of the overlay to approximately one third that of normal lead-10% tin and one half that of lead-10% tin-2% copper which was developed as a more wear resistant overlay. Other overlay examples are also given in Figure 2. It may also been seen that an addition of 0.7wt% alumina results in a wear rate less than hall that of conventional lead-10% tin.

**Table 2**

| Wt% Alumina | Total Wt Loss After 140 Hours Test (mg) |
|---|---|
| 0.0 | 15 |
| 0.3 | 9.8 |
| 0.5 | 9.0 |
| 0.7 | 8.5 |
| 0.85 | 7.2 |
| 1.0 | 6.0 |

The wear results obtained refer to testing against a hardened steel shaft, and the indications from 3-dimensional surface finish measurements show that there has been a very light polishing of the shaft. Thus, the Ra value has been reduced from 0.32 to 0.20 micrometres, and the peak value (Rp) from 1.02 to 0.73 micrometres. This shows the benefit obtained by the overlay of the present invention in removing imperfections from the journal surface without causing damage thereto.

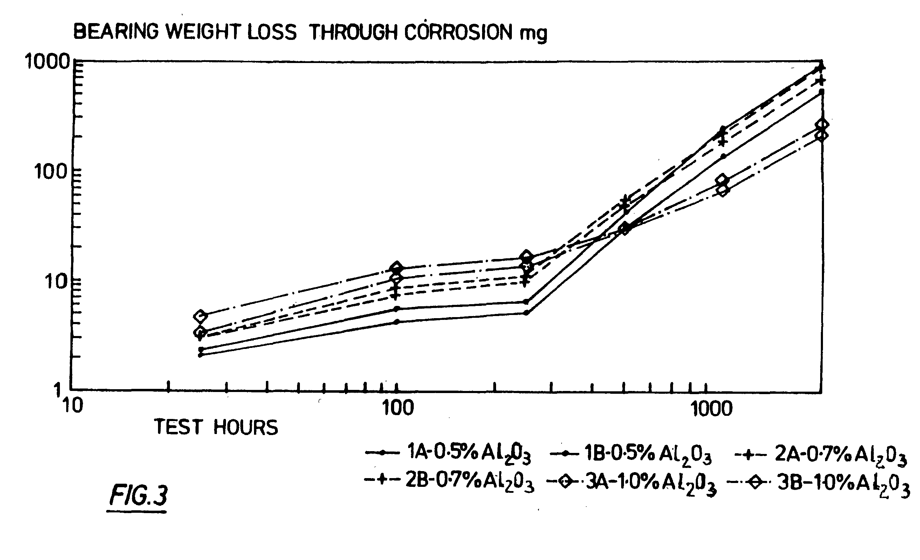

The hard particle phase has been found to have a virtually neutral effect on the corrosion resistance of lead-10%-tin overlays. Figure 3 graphically depicts the corrosion resistance of overlays having 0.5, 0.7 and 1.0 wt% alumina, the 'B' samples being repeat tests of the 'A' samples at each alumina level. The corrosion tests were carried out by immersing plated samples in medicinal white oil at 120°C and recording weight loss at 24, 250, 1000 and 2000 hours. The oil used is very pure having no inhibitors, and degrades rapidly under the test conditions to give very aggressive attack.

## Claims

1. Use for a plain journal bearing of an internal combustion engine of a composite material comprising a bearing material on which is deposited an overlay coating, the overlay coating comprising a soft metal matrix which has dispersed therein a second phase of a hard, non-metallic material, said hard, non-metallic material having a Vickers hardness (Hv) bf at least 300, the bulk of said overlay coating being constituted by the soft metal matrix, the composite material being **characterised in that** the matrix of the soft metal overlay coating is selected from the group consisting of: tin-based; lead-based; and, cadmium-based metals and **in that** the hard second phase consists of alumina particles and **in that** said soft metal and said hard particles are deposited by electro-codeposition and whereby the ability to embed dirt particles in said electro-codeposited overlay coating comprising the matrix selected from tin-based; lead-based; and, cadmium-based metals having the dispersed phase of alumina therein is not adversely affected compared with that of the soft metallic phase of the matrix.

2. Use according to claim 1 wherein the hard, non-metallic material has an Hv value in excess of 600.

3. Use according to either claim 1 or claim 2 wherein the overlay comprises from 0.05 up to 2wt% of alumina.

4. Use according to claim 3 wherein the overlay comprises from 0.05 up to 1 wt% of alumina.

5. Use according to any preceding claim wherein the agglomerated size of the alumina particles is not more than about 5 micrometers, the size of individual particles being less than one micrometre.

6. Use according to any preceding claim wherein the overlay comprises from 0.1 to 1wt% of alumina.

## Patentansprüche

1. Verwendung eines Verbundmaterials für ein Radiallager für einen Verbrennungsmotor, umfassend ein Lagermaterial, auf dem eine Overlay-Beschichtung abgeschieden ist, wobei die Overlay-Beschichtung eine Weichmetallmatrix umfaßt, die darin dispergiert eine zweite Phase eines harten, nicht-metallischen Materials aufweist, wobei das harte, nicht-metallische Material eine Vickers-Härte (Hv) von mindestens 300 aufweist, wobei die Masse der Overlay-Beschichtung aus der weichen Metallmatrix aufgebaut ist, wobei das Verbundmaterial **dadurch gekennzeichnet ist, daß** die Matrix der Weichmetall-Overlay-Beschichtung aus der Gruppe, bestehend aus: Metallen auf Zinn-Basis, Blei-Basis und Cadmium-Basis, ausgewählt ist, und dadurch, daß die harte zweite Phase aus Aluminiumoxidteilchen besteht, und dadurch, daß das Weichmetall und die harten Teilchen durch Elektro-Co-Abscheidung abgeschieden werden, und wobei die Befähigung, Schmutzpartikel in der elektro-co-abgeschiedenen Overlay-Beschichtung, umfassend die Matrix, ausgewählt aus Metallen auf Zinn-Basis, Blei-Bais und Cadmium-Basis, mit der dispergierten Phase von Aluminiumoxid darin, einzubetten, nicht gegenteilig beeinflußt wird im Vergleich zu derjenigen der Weichmetallphase der Matrix.

2. Verwendung nach Anspruch 1, wobei das harte, nicht-metallische Material einen Hv-Wert im Übermaß von 600 aufweist.

3. Verwendung nach Anspruch 1 oder Anspruch 2, wobei die Overlay-Beschichtung von 0,05 bis zu 2 Gew.-% Aluminiumoxid umfaßt.

4. Verwendung nach Anspruch 3, wobei die Overlay-Beschichtung von 0,05 bis zu 1 Gew.-% Aluminiumoxid umfaßt.

5. Verwendung nach einem vorgehenden Anspruch, wobei die agglomerierte Größe der Aluminiumoxidteilchen nicht mehr als etwa 5 µm beträgt und wobei die Größe der einzelnen Teilchen weniger als 1 µm beträgt.

6. Verwendung nach einem vorhergehenden Anspruch, wobei die Overlay-Beschichtung von 0,1 bis 1 Gew.-% Aluminiumoxid umfaßt.

## Revendications

1. Utilisation, pour un palier transversal lisse d'un moteur à combustion interne, d'un matériau composite comprenant un matériau de support sur lequel est déposée une couche de recouvrement, la couche de recouvrement comprenant une matrice de métal tendre dans laquelle est dispersée une seconde phase d'un matériau dur non métallique, ledit matériau dur non métallique ayant une dureté Vickers (Hv) d'au moins 300, la plus grande partie de ladite couche de recouvrement étant constituée de la matrice de métal tendre, le matériau composite étant **caractérisé en ce que** la matrice de la couche de métal tendre de recouvrement est choisie dans le groupe consistant en : des métaux à base d'étain, des métaux à base de plomb et des métaux à base de cadmium et **en ce que** la seconde phase dure consiste en particules d'alumine et **en ce que** ledit métal tendre et lesdites particules dures sont déposés par électro-codéposition et, ainsi, l'aptitude à inclure des particules de poussière dans ladite couche de recouvrement électro-codéposée comprenant la matrice choisie entre des métaux à base d'étain, des métaux à base de plomb et des métaux à base de cadmium renfermant la phase dispersée d'alumine n'est pas influencée de manière néfaste, comparativement à celle de la phase métallique tendre de la matrice.

2. Utilisation suivant la revendication 1, dans laquelle le matériau non métallique dur a une valeur de Hv supérieure à 600.

3. Utilisation suivant la revendication 1 ou la revendication 2, dans laquelle la couche de recouvrement comprend 0,05 à 2 % en poids d'alumine.

4. Utilisation suivant la revendication 3, dans laquelle la couche de recouvrement comprend 0,05 à 1 % en poids d'alumine.

5. Utilisation suivant l'une quelconque des revendications précédentes, dans laquelle les dimensions à l'état aggloméré des particules d'alumine sont non supérieures à environ 5 micromètres, les dimensions des particules distinctes étant inférieures à 1 micromètre.

6. Utilisation suivant l'une quelconque des revendications précédentes, dans laquelle la couche de recouvrement comprend 0,1 à 1 % en poids d'alumine.
